# EUROPEAN PATENT SPECIFICATION

(11) **EP 4 571 944 B1**
(45) Date of publication and mention of the grant of the patent: **06.05.2026**
(21) Application number: 23216652.0
(22) Date of filing: 14.12.2023
(51) Int. Cl.: H01M 10/625

(54) **HEAT EXCHANGE ASSEMBLY**
WÄRMETAUSCHERANORDNUNG
ENSEMBLE D'ÉCHANGE DE CHALEUR

(43) Date of publication of application: 18.06.2025
(73) Proprietor: Rimac Technology LLC, 10431 Sveta Nedelja (HR)
(72) Inventor: Milanovic, Niko, 31500 Nasice (HR); Walchester, Alan Leigh, Warwick, CV345PD (GB); Ponomar, Andriy, 10110 Zagreb (HR)
(74) Representative: Hoffmann Eitle

(56) References cited:
- EP-A1- 2 643 870
- EP-A1- 4 138 176
- CN-A- 112 751 106
- DE-A1- 102019 127 808
- GB-A- 2 586 058

## Description

### TECHNICAL FIELD

The present invention relates to the field of battery systems comprising a plurality of battery cells and more particularly to the field of heat exchange in battery systems.

### BACKGROUND

Batteries comprising a plurality of battery cells are playing an increasing role in energy storage for both mobility and grid storage applications.

The temperature of the battery cells is critical for the performance of the battery cells, for example for the charge and discharge capacity of the battery cells. The temperature of the battery cells affects also the lifetime of the battery cells and accordingly the lifetime of the battery.

During operation, the battery cells produce heat which needs to be properly rejected from the battery in order that a safe operation of the battery is ensured.

Further, heating of the battery cells may be required in situations in which the temperature of the battery, influenced, for example, by the temperature of the surrounding environment of the battery, is disadvantageous for the operation of the battery. In such situations, it may be required that the battery is heated, at least up to a predetermined temperature, above which safe operation of the battery can be guaranteed before the battery is operated.

For this, the battery is normally equipped with a system for heat exchange transfer. A system for heat exchange transfer normally employs a heat exchange fluid for heat exchange between the battery cells and the heat exchange fluid.

The temperature of the heat exchange fluid normally changes as the heat exchange fluid flows through the heat exchange system. For cooling, the temperature of the heat exchange fluid normally increases since the battery cells give away heat to the heat exchange fluid. For heating, the temperature of the heat exchange fluid normally decreases since the heat exchange fluid gives away heat to the battery cells. This change of temperature of the heat exchange fluid leads to some battery cells exhibiting higher degree of heat exchange than other of the battery cells in the battery.

Document EP 4 138 176 A1 relates to a heat exchange device for batteries for discharging heat from the battery and providing heat to said battery in the event of low outside temperatures, so as to achieve an optimal operation.

Document EP 2 643 870 A1 relates to a heat exchanger module that comprises a flow inlet, a flow outlet and at least two lamination packs in fluid communication with said flow inlet and flow outlet. The lamination pack comprises a first plate, a second plate, and a central plate having cutouts forming flow channels when said central plate is located in between said first and second plates.

Accordingly, there is a need for a heat exchange system capable of maintaining a more uniform temperature of the heat exchange fluid.

### SUMMARY

The present invention is defined with the appended independent claim 1. Advantageous embodiments are described in the appended dependent claims.

In one aspect there is provided a heat exchange assembly for a battery system, the battery system comprising a plurality of battery cells, the heat exchange assembly comprising:
a heat exchange element extending along a first direction and having:
   - a first surface and a second surface facing the first surface along a second direction perpendicular to the first direction;
   - at least one first channel and at least one second channel each for accommodating a fluid and provided between the first surface and the second surface, each of the at least one first channel and the at least one second channel extending along the first direction,
      and
   - at least one first opening provided on the first surface, the at least one first opening being in a fluid communication with the at least one first channel, and at least one second opening provided on the second surface, the at least one second opening being in a fluid communication with the at least one second channel,
the heat exchange assembly comprising further:
   a fluid distribution member mounted on the heat exchange element, the fluid distribution member comprising an inlet port for distributing a fluid in the at least one first channel via the first opening and an outlet port for distributing a fluid out of the at least one second channel via the second opening.

### BRIEF DESCRIPTION OF THE DRAWINGS

Embodiments of the present invention which are presented for better understanding the inventive concept of the present invention, but which are not to be seen as limiting the present invention, will now be described with reference to the figures in which:
- Fig. 1: shows schematically a heat exchange assembly;
- Fig. 2a: shows schematically a heat exchange assembly according to an embodiment of the present invention;
- Fig. 2b: shows a cross-section of a heat exchange element of the heat exchange assembly according to an embodiment of the present invention;
- Figure 3a: shows the heat exchange element of the heat exchange assembly according to an embodiment of the present invention;
- Fig. 3b: shows the heat exchange assembly according to an embodiment of the present invention;
- Fig. 4: shows the elements of the fluid distribution member of the heat exchange assembly according to an embodiment of the present invention;
- Fig. 5: shows the elements of the heat exchange assembly according to an embodiment of the present invention;
- Fig. 6: shows a cross-section of a part of the heat exchange assembly according to an embodiment of the present invention;
- Fig. 7: shows a cross-section of a part of the heat exchange assembly according to an embodiment of the present invention;
- Fig. 8: shows the heat exchange element of the heat exchange assembly according to an embodiment of the present invention;
- Fig. 9: shows examples of end member of the heat exchange assembly in embodiments of the present invention;
- Fig. 10a: shows a distribution of the first openings and the second openings on the heat exchange element of the heat exchange assembly according to an embodiment of the present invention;
- Fig. 10b: shows a distribution of the first openings on the heat exchange assembly according to an embodiment of the present invention;
- Fig. 11a and b: show examples of the fluid distribution member of the heat exchange assembly in embodiments of the present invention;
- Figure 12a and b: show a heat exchange assembly according to embodiments not falling under the scope of the claims;
- Figure 13: shows elements of the heat exchange assembly according to an embodiment of the present invention;
- Figure 14: shows a cross-sectional view of the fluid distribution member of the heat exchange assembly according to an embodiment of the present invention;
- Figure 15: shows a heat exchange assembly according to an embodiment of the present invention;
- Figure 16: shows a heat exchange assembly according to an embodiment of the present invention;

### DETAILED DESCRIPTION

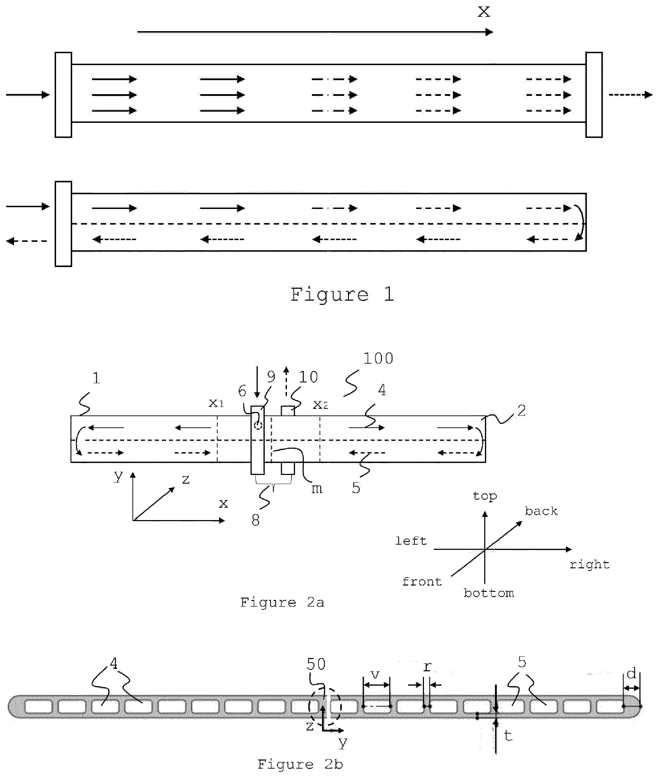

There is shown in the upper panel in figure 1 schematically a heat exchange assembly comprising a heat exchange element extending along a first direction (denoted with x in the figure). The heat exchange element may be used in a battery system comprising a plurality of battery cells. The heat exchange element may have a shape of a parallelepiped with a front surface (the surface shown in figure 1) and a back surface facing the front surface. In the heat exchange element one or more channels are provided between the front surface and the back surface. A heat exchange fluid is allowed to flow through the one or more channels. The plurality of channels are schematically represented in figure 1 with arrows. The heat exchange element further comprises an inlet port for distributing the heat exchange fluid in the one or more channels and an outlet port for distributing the heat exchange fluid outside of the one or more channels and hence outside of the heat exchange element.

There is shown in the upper panel in figure 1 that the inlet port and the outlet port are arranged at two end surfaces of the heat exchange element, the two end surfaces facing each other along the first direction. There is shown in the upper panel in figure 1 that the inlet port is arranged at the end surface on the left of the figure (left end surface), while the outlet port is arranged at the end surface on the right of the figure (right end surface). With such arrangement of the inlet port and the outlet port the heat exchange fluid flows from the left end surface toward the right end surface.

With such arrangement of the inlet port and the outlet port, the temperature of the heat exchange fluid changes (this is schematically represented in figure 1 with the arrows being presented with a solid line, a dashed dotted line and a dashed line) as the fluid flows toward the outlet port arranged at the right end surface. In other words, with such arrangement of the inlet port and the outlet port, in the middle portion of the heat exchange element the temperature of the heat exchange fluid (dashed dotted line arrow) is different from the temperature of the heat exchange fluid in the portion closer to the left end surface (solid line arrow). In the portion of the heat exchange element closer to the right end surface the temperature of the heat exchange fluid (dashed line arrow) is even more different from the temperature of the heat exchange fluid in the portion closer to the left end surface.

There is shown in the lower panel in figure 1 schematically a heat exchange element on which the inlet port and the outlet port are arranged at the same end surface, here the left end surface. In this arrangement of the inlet port and the outlet port, the heat exchange element comprises at least one channel arranged in the upper part of the heat exchange element (upper part is above the dashed line in figure 1b) and at least one channel in the lower part of the heat exchange element (lower part is below the dashed line in figure 1b). The at least one channel arranged in the upper part and the at least one channel arranged in the lower part are in a fluid communication in the vicinity of the right end surface. The heat exchange fluid enters the at least one channel arranged in the upper part via the inlet port and flows toward the right end surface. In the vicinity of the right end surface the heat exchange fluid makes a U-turn and enters the at least one fluid channel arranged in the lower part and flows toward the outlet port arranged at left end surface. The heat exchange fluid leaves the heat exchange element via the outlet port. In this arrangement of the inlet port and the outlet port, the temperature of the heat exchange fluid changes (this is schematically represented in figure 1 with the arrows being presented with a solid line, a dashed dotted line and a dashed line) as it flows toward the outlet port.

Hence, in a heat exchange element as the one shown in the upper panel in figure 1 and as the one shown in the lower panel in figure 1 it is difficult to maintain uniform the temperature of the heat exchange fluid between the inlet port and the outlet port. Since the temperature of the heat exchange fluid is not uniform, some battery cells will exhibit a higher degree of heat transfer than other of the battery cells.

To account for this, the present invention proposes a heat exchange assembly that provides for better flow distribution of the heat exchange fluid in terms of thermal performance.

Figure 2a shows schematically a heat exchange assembly 100 according to an embodiment of the present invention. The heat exchange assembly 100 is for a battery system. The battery system comprises a plurality of battery cells. The battery cells may be mounted on the heat exchange assembly 100 or may be in direct or indirect contact with the heat exchange assembly 100 without being fixed on the heat exchange assembly 100. The battery system may be a battery module or a battery pack. The battery pack may comprise one or more battery modules. In other embodiments of the present invention, the battery pack may comprise groups of battery cells. The battery cell in each group may be mounted on the heat exchange assembly 100 or may be in direct or indirect contact with the heat exchange assembly 100 without being fixed to the heat exchange assembly.

The heat exchange assembly 100 comprises a heat exchange element 1. The heat exchange element 1 may have a form of a parallelepiped. The surfaces may be flat surfaces, however this is not limiting, as elaborated further below. In other words, at least one or more surfaces may not be flat surfaces. The heat exchange element 1 extends along a first direction. In figure 2a the first direction is denoted as x. The size of the heat exchange element 1 along the first direction is referred here below also as the length of the heat exchange element 1.

The heat exchange element 1 has a first surface 2. The first surface 2 is shown in figure 2a. This surface may also be called front surface. The heat exchange element 1 further has a second surface (not shown in figure 2) facing the first surface 2 along a second direction perpendicular to the first direction. The direction along which the second surface is facing the first surface is denoted with z in figure 2a. The size of the heat exchange element 1 between the first surface 2 and the second surface is referred here below also as the thickness of the heat exchange element 1.

The heat exchange element 1 comprises further at least one first channel 4 (schematically represented with arrows) and at least one second channel 5 (schematically represented with arrows), each for accommodating a fluid and provided between the first surface 2 and the second surface. The fluid may also be called a heat exchange fluid here below. Each of the at least one first channel 4 and the at least one second channel 5 extends along the first direction (x direction).

As elaborated further below, the at least one first channel 4 and the at least one second channel 5 may be in fluid communication with each other. There is shown in figure 2a that the at least one first channel 4 and the at least one second channel 5 may be in fluid communication with each other at each of the end sides of the heat exchange element 1. The end sides are the end sides facing each other along the x direction. They may also be called here below left end side and right end side (end side on the left in figure 2a and end side on the right in figure 2a).

The heat exchange element 1 comprises further at least one first opening 6 provided on the first surface 2. The at least one first opening 6 is in a fluid communication with the at least one first channel 4. The heat exchange element 1 comprises further at least one second opening (not shown in figure 2a) provided on the second surface 3. The at least one second opening is in a fluid communication with the at least one second channel 5.

Each of the at least one first opening 6 and at least one second opening 7 being in a fluid communication with the respective one of the at least one first channel 4 and at least one second channel 5 means that the fluid can enter or exit the respective one of the at least one first channel 4 and at least one second channel 5 via the respective one of the at least one first opening 6 and at least one second opening 7.

The heat exchange assembly 100 comprises further a fluid distribution member 8 mounted on the heat exchange element 1. The fluid distribution member 8 comprises an inlet port 9 for distributing the fluid in the at least one first channel 4 via the at least one first opening 6 and an outlet port 10 for distributing the fluid out of the at least one second channel 5 via the at least one second opening 7.

The at least one first channel 4 and the at least one second channel 5 may be arranged along a third direction that is perpendicular to each one of the first direction (x direction) and the second direction (z direction). In figure 2a, the third direction is denoted with y. The size of the heat exchange element 1 along the y direction is also called here below the height of the heat exchange element 1. The at least one first channel 4 and the at least one second channel 5 may be arranged to face each other along the third direction.

Preferably, the at least one first channel 4 is arranged in the top part of the heat exchange element 1 (upper side in the figure) and the at least one second channel 5 is arranged in the bottom part of the heat exchange element 1 (lower side in the figure). In other words, preferably, the heat exchange assembly 100 is arranged in the battery system such that the at least one first channel 4 is above the at least one second channel 5.

The at least one first opening 6 and the at least one second opening 7 may be arranged along the third direction (y direction). The at least one first opening 6 and the at least one second opening 7 may be provided on the first surface 2 and the second surface 3 respectively in the middle portion of the heat exchange element 1.

There is shown in figure 2a that the at least one first opening 6 and the at least one second opening 7 are provided on the first surface 2 and the second surface 3 respectively in the middle portion of the heat exchange element 1.

The fluid distribution member 8 may be mounted on the heat exchange element 1 in a portion of the heat exchange element 1 where the respective one of the at least one first opening 6 and at least one second opening 7 is provided. There is shown in figure 2a that the fluid distribution member 8 is mounted on the heat exchange element 1 in the middle portion of the heat exchange element 1.

The middle portion of the heat exchange element 1 may be a portion of the heat exchange element 1 that may comprise the central line m of the heat exchange element 1 but may also be a portion of the heat exchange element 1 on one side or the other side of the central line along the direction of extension of the heat exchange element 1. Preferably, in an embodiment of the present invention, the middle portion is a portion of the heat exchange element 1 that comprises the central line m and extends on both sides (along the first direction) of the central line m to a predetermined position x1 and a predetermined position x2. The term "central line" m denotes the line extending in a direction perpendicular to the direction of extension of the heat exchange element (this direction being denoted as y direction in figure 2a) and symbolically cutting the heat exchange element 1 and hence symbolically dividing the heat exchange element 1 at two equal parts (left part and right part in figure 2a). In other words, since the heat exchange element 1 is elongated along the x direction, the central line m is the line that divides the heat exchange element 1 at two equal halves along its length. Therefore, preferably, in an embodiment of the present invention, the central line symbolically divides the middle portion of the heat exchange element 1 into two, preferably equal, sub-portions.

The fluid distribution member 8 does not need to be mounted on the heat exchange element 1 in the middle portion of the heat exchange element 1. In addition, the at least one first opening 6 and at least one second opening 7 do not need to be provided in the middle portion of the heat exchange element 1. For example, in embodiments of the present invention, the fluid distribution member 8 may be mounted in a portion of the heat exchange element 1 closer to the left end side or the right end side of the heat exchange element 1. In addition, the at least one first opening 6 and at least one second opening 7 may be provided in a portion of the heat exchange element 1 closer to the left end side or the right end side of the heat exchange element. In embodiments of the present invention, it is however preferable that the fluid distribution member 8 is mounted in the middle portion of the heat exchange element 1. In embodiments of the present invention, it is however preferable that the at least one first opening 6 and at least one second openings 7 are provided in the middle portion of the heat exchange element 1.

The heat exchange assembly 100 according to the embodiment of the present invention shown in figure 2a enables better flow distribution of the heat exchange fluid in terms of thermal performance in comparison to the arrangements shown in figure 1a and figure 1b. The battery cells that may be mounted on the heat exchange assembly 100, for example on the first surface 2 and/or on the second surface 3 of the heat exchange element 1 or may be in a direct or indirect contact with the heat exchange assembly 100 without being fixed to the heat exchange assembly 100 may be more evenly cooled since the temperature of the heat exchange fluid closer to the left end side end and the right end side end of the heat exchange element 1 is more uniform. The arrangement in which the heat exchange fluid makes a U-turn in the vicinity of the left end side and the vicinity of the right end side (double U-turn) ensures that the battery cells receive a more uniform heat exchange effect from the heat exchange fluid. In addition, the heat exchange fluid has a shorter path to exchange heat which is increasing the heat exchange efficiency.

The profile of the heat exchange element 1 can vary in terms of thickness t, thickness between the at least one first channel 4 and the at least one second channel 5 (also called rib thickness r), cross-section of each of the at least one first channel 4 and at least one second channel 5 (also called void size v) as well as the number of first channels 4 and the number of second channels 5. This profile of the heat exchange element 1 affects the thermal performance of the heat exchange element 1, the pressure drop and the structural rigidity of the heat exchange element 1. Therefore, the profile of the heat exchange element 1 is normally chosen in dependence of the application environment of the heat exchange element **1.** The profile of the heat exchange element 1 is normally chosen to balance between thermal performance, pressure drop and structural rigidity.

There is shown in figure 2b a cross section of a heat exchange element 1 comprising a plurality of first channels 4 and a plurality of second channels 5 in an embodiment of the present invention is shown. Typical dimensions are for example 3.68 mm for v, 0.80 mm for r, 2.25 mm for d and 0.60 mm for t.

The central rib 50 is the divider rib between the at least one first channel 4 and the at least one second channel 5, in this embodiment the divider rib between the plurality of first channels 4 and the plurality of second channels 5. The thickness of the central rib 50 can be different from the thickness of the other ribs. The thickness of the central rib 50 may be adjusted to prevent or reduce as much as possible the heat transfer between the at least one first channel 4 and the at least one second channel 5. More specifically, the thickness of the central rib 50 may be adjusted to prevent or reduce as much as possible the heat transfer between the neighbouring first channel 4 and second channel 5. The thickness of the central rib 50 may be larger than the thickness of the other ribs. In this case, less heat is exchanged between the neighbouring first channel 4 and second channel 5.

In one or more embodiments of the present invention the heat exchange element 1 may be a one-piece extruded element. It is to be therefore understood that the heat exchange element 1 may be formed by extrusion as a one-piece element or a one-piece component. The word "component" may be used interchangeably with the word "element" herein. A one-piece element or a one-piece component is to be understood as a single physically undivided piece. In other words, for manufacturing the heat exchange element 1, a piece of material may be shaped by extrusion for forming the first surface 2, the second surface 3, the at least one first channel 4 and the at least one second channel 5. Afterwards, the at least one first opening 6 and the at least one second opening 7 may be formed by drilling on the respective one of the first surface 2 and the second surface 3.

Since the at least one first opening 6 and the at least one second opening 7 are provided on the heat exchange element 1 on the respective one of the first surface 2 and the second surface 3 it is possible to provide the heat exchange element 1 as a one-piece extruded element. This eliminates the need for providing the heat exchange element 2 in at least two pieces and joining them in the portion where the fluid distribution member 8 is mounted. The one-piece heat exchange element 1 has increased structural stability over a heat exchange element 1 provided in two or more pieces.

In embodiments of the present invention the at least one first opening 6 and the at least one second opening 7 may be arranged along the central line m on the respective one of the first surface 2 and the second surface 3. In other embodiments of the present invention, the at least one first opening 6 may be arranged on one side of the central line m and/or the at least one second opening 7 may be provided on the opposite side of the central line m. In other words, in these embodiments of the present invention the at least one first opening 6 and the at least one second opening 7 may be arranged on opposite sides of the central line m. In still other embodiments of the present invention, the at least one first opening 6 and the at least one second opening 7 may be provided on the same side of the central line m.

In embodiments of the present invention the at least one first opening 6 and the at least one second opening 7 may have the same shape and/or the same size. For example, the at least one first opening 6 and the at least one second opening 7 may have a circular shape.

In other embodiments of the present invention the shape of the at least one first opening 6 may be different than the shape of the at least one second opening 7 and/or the size of the at least one first opening 6 may be different than the size of the at least one second opening 7.

As elaborated above, in an embodiment of the present invention, the fluid distribution member 8 is mounted on the heat exchange element 1 in the middle portion of the heat exchange element 1. The fluid distribution member 8 is mounted on the heat exchange element 1 such that the inlet port 9 is arranged to face the first surface 2 and the outlet port 10 is arranged to face the second surface 3.

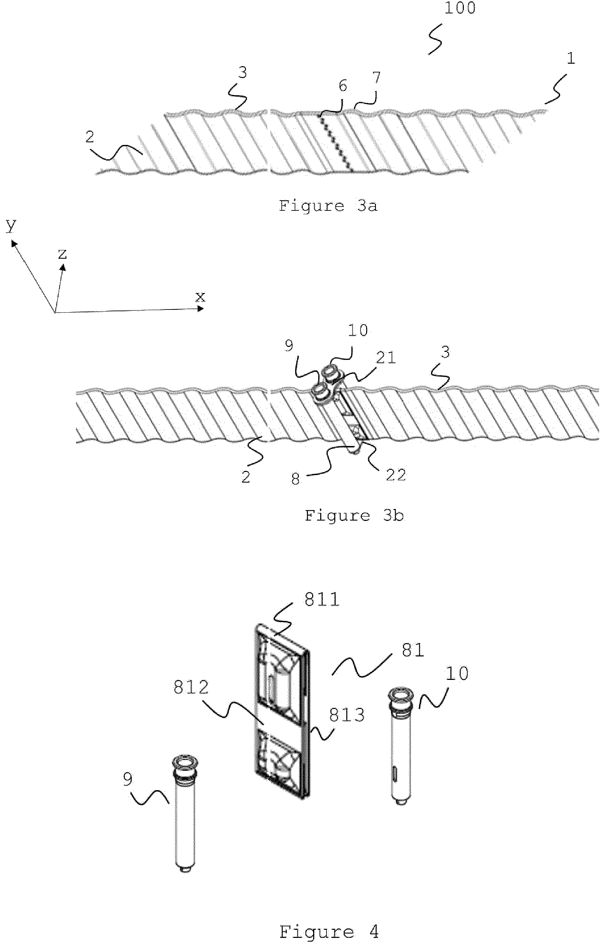

There is shown in figure 3a a part of the heat exchange element 1 in an embodiment of the present invention. In this embodiment, the heat exchange element 1 has a plurality of first openings 6 provided on the first surface 2 and a plurality of second openings 7 provided on the second surface 3.

Further, there is shown in figure 3a that the first surface 2 and the second surface 3 are not flat surfaces but have formed undulations. Each undulation may be arranged to accommodate at least one battery cell. In other words, in each undulation on the first surface 2 a battery cell may be arranged. The battery cell may be arranged in the undulation by way of gluing it on the first surface 2 in the corresponding undulation. However, gluing may not be necessary and other manners of providing the battery cell in the undulation may also be used. Similarly, in each undulation on the second surface 3 a battery cell may be arranged.

The undulations increase the packing density of the battery cells and increase the compactness of the battery system. Preferably, the undulations are provided in portions of the heat exchange element 1 other than the middle portion in embodiments of the present invention in which the fluid distribution member 8 is mounted in the middle portion of the heat exchange element 1. In other words, the undulations are preferably provided in portions of the heat exchange element 1 other than the portion where the fluid distribution member 8 is mounted. In other embodiments, it is also possible to provide undulations in the portion of the heat exchange element 1 where the fluid distribution member 8 is mounted on the heat exchange element 1.

There is shown in figure 3b the fluid distribution member 8 mounted on the heat exchange element 1 in an embodiment of the present invention. There is shown in figure 3b that the fluid distribution member 8 is mounted on the heat exchange element 1 such that the inlet port 9 is arranged to face the first surface 2 and the outlet port 10 is arranged to face the second surface 3.

Preferably, in one or more embodiments of the present invention, the fluid distribution member 8 is a pre-formed one-piece element (pre-formed one-piece component) arranged to be mounted on the heat exchange element 1 by sliding along the third direction (y direction).

In one or more embodiments of the present invention, as shown in figure 4 the fluid distribution member 8 may have a fluid distribution member plate 81 on which the inlet port 9 and the outlet port 10 are arranged. The fluid distribution member plate 81 may be a bent plate having a bent portion 811 and two sides 812, 813 facing each other, with a distance between the two sides arranged to fit on the heat exchange element 1 on the first surface 2 and the second surface 3. The fluid distribution member 8 is arranged to be mounted on the heat exchange element 1 by sliding it along the third direction (y direction) such that the one side 812 slides on the first surface 2 and the other side 813 slides on the second surface 3. It is to be understood that although the elements are shown in figure 4 as separate elements, preferably, the fluid distribution member 8 is a pre-formed one-piece element. In other words, the elements shown in figure 4 may be joined together by brazing, thereby forming the fluid distribution member 8 as a one-piece element to be mounted on the heat exchange element 1.

The heat exchange assembly 100 may comprise further a first support element 21 in an embodiment of the present invention. In addition, or alternatively, the heat exchange assembly 100 may comprise a second support element 22. The first support element 21, and the second support element 22 may be each mounted on the fluid distribution member 8. The first support element 21 may comprise an inlet opening 211 for accommodating the inlet port 9 and an outlet opening 212 for accommodating the outlet port 10 of the fluid distribution member 8. Similarly, the second support element 22 may comprise an inlet opening 221 for accommodating the inlet port 9 and an outlet opening 222 for accommodating the outlet port 10 of the fluid distribution member 8.

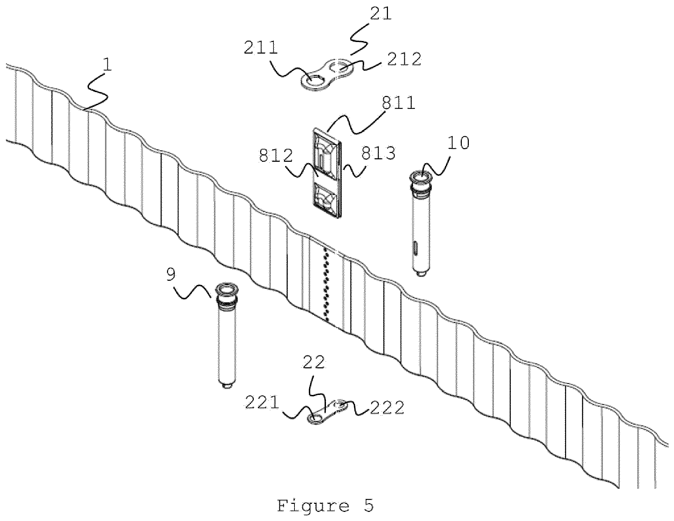

There is shown in figure 5 schematically an exploded view of the heat exchange element 1, the fluid distribution member 8, the first support plate 21 and the second support plate 22 in an embodiment of the present invention. The fluid distribution member 8 may be mounted on the heat exchange element 1 by way of sliding as elaborated above.

In one or more embodiments of the present invention, the inlet port 9, the outlet port 10 and the first support element 21 may be assembled together. In a further step, the fluid distribution member 81 may be mounted along the y direction around the heat exchange member 1. In a still further step, the assembled inlet port 9, the outlet port 10 and the first support element 21 may be positioned on the fluid distribution member 81. Subsequently, the second support element 22 may be mounted to connect the inlet port 9 and the outlet port 10. In a still further step, a brazing may be performed.

The first support plate 21 and the second support plate 22 facilitate the aligning of the fluid distribution member 8 on the heat exchange element 1 and increase the structural stability of the heat exchange assembly 100.

Figure 3b shows the fluid distribution member 8 mounted on the heat exchange element 1, with the first support plate 21 and the second support plate 22 mounted on the respective side.

The inlet port 9 may comprise at least one inlet opening 91 arranged to be in fluid communication with the at least one first opening 6 and the outlet port 10 may comprise at least one outlet opening 101 arranged to be in a fluid communication with the at least one second opening 7.

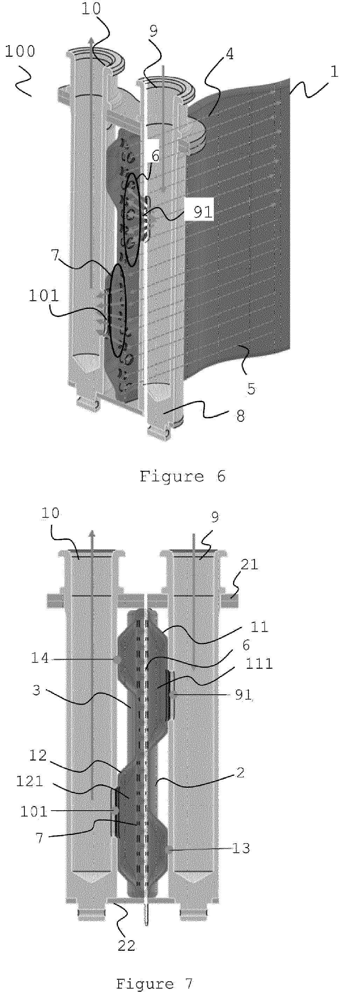

There is shown in figure 6 a cross-sectional view of the heat exchange assembly 100 in an embodiment of the present invention.

There is shown in figure 6 that the inlet port 9 of the fluid distribution member 8 comprises one inlet opening 91 and the outlet port 10 of the fluid distribution member 8 comprises one outlet opening 101. In the embodiment shown in figure 6 the heat exchange element 1 comprises a plurality of first openings 6 and a plurality of second openings 7. The one inlet opening 91 is in fluid communication with the plurality of first openings 6 and the one outlet opening 101 is in fluid communication with the plurality of second openings 7 (the fluid communication is schematically represented with arrows).

In other embodiments of the present invention, the inlet port 9 may comprise a plurality of inlet openings 91 and the outlet port 10 may comprise a plurality of outlet openings 101. The plurality of inlet openings 91 may be arranged to be in a fluid communication with the at least one opening 6 and the plurality of outlet openings 101 may be arranged to be in a fluid communication with the at least one second opening 7. Providing a plurality of inlet openings 91 and a plurality of outlet openings 101 increases the structural stability of the fluid distribution member 8 but it also increases the pressure drop on the heat exchange element 1. On the other hand, one inlet opening 91 and one outlet opening 9 achieves better pressure drop on the heat exchange element 1. Depending on the material of the heat exchange element 1 and the material of the fluid distribution member 8, as well as on the specific application of the heat exchange assembly 100 in the battery system and the specific application of the battery system, the number of inlet openings 91 and the number of outlet openings 101 may be chosen to balance between the pressure drop and the structural stability.

In one or more embodiments of the present invention, in the heat exchange element 1 in the portion where the fluid distribution member 8 is to be mounted, for example in the middle portion as elaborated above, the first surface 2 may have a first bulge 11 extending outwards from the heat exchange element 1 and the second surface 3 may have a first bulge 12 extending outwards from the heat exchange element 1. The first bulge 11 of the first surface 2 may form an inlet chamber 111 around the at least one first opening 6 and the first bulge 12 of the second surface 3 may form an outlet chamber 121 around the at least one second opening 7.

There is shown in figure 7 a cross-sectional view of the heat exchange assembly in an embodiment of the present invention. There is shown in figure 7 the first surface 2 having a first bulge 11. The first bulge 11 forms an inlet chamber 111 around the at least one first openings 6. The inlet opening 91 of the inlet port 9 opens into the inlet chamber 11. There is shown in figure 7 the second surface 3 having a first bulge 12. The first bulge 12 forms an outlet chamber 121 around the at least one second openings 7. The outlet opening 101 opens into the outlet chamber 121.

There is further shown in figure 7 that the first surface 2 has a second bulge 13 extending outwards from the heat exchange element 1. The second surface 3 has a second bulge 14 extending outwards from the heat exchange element 1. A wall of the inlet port 9 abuts against at least a part of the second bulge 13 of the first surface 2 and a wall of the outlet port 10 abuts against at least a part of the second bulge 14 of the second surface 3. Each of the second bulges 13, 14 of the respective one of the first surface 2 and second surface 3 facilitates the alignment of the fluid distribution member 8 on the heat exchange element.

Each of the first surface 2 and the second surface 3 between the respective first bulge 11, 12 and the respective second bulge 13, 14 the respective one of the first surface 2 and the second surface 3 may have a flat shape.

This form of the first surface 2 and the second surface 3 prevents the heat exchange fluid to be distributed in the at least one first channel 4 mixes with the heat exchange fluid to be distributed away from the at least one second channel 5.

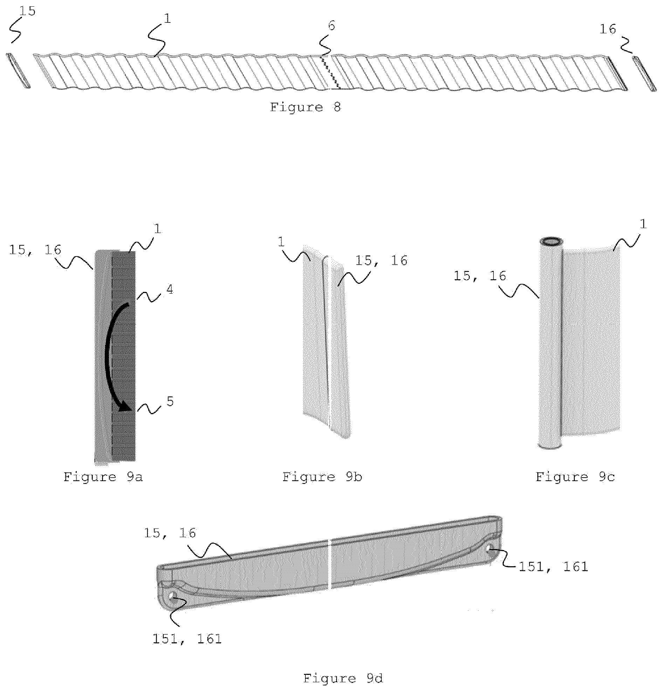

In an embodiment of the present invention, the heat exchange assembly 100 may further comprise a first end member 15 arranged on one end side of the heat exchange element 1 and a second end member 16 arranged on the other end side of the heat exchange element 1. This is shown schematically in figure 8. Each of the first end member 15 and the second end member 16 may be arranged to establish a fluid communication between the at least one first channel 4 and the at least one second channel 5.

In one embodiment of the present invention, for establishing a fluid communication between the at least one first channel 4 and the at least one second channel 5, each of the first end member 15 and the second end member 16 may have a curved shape for guiding the fluid between the at least one first channel 4 and the at least one second channel 5. The curved shape is shown in figure 9a. The curved shape gives each of the first end member 15 and second end member 16 a "banana"-like shape. There is shown in figure 9a with the arrow the path along which the heat exchange fluid is guided from the at least one first channel 4 to the at least one second channel 5. In each of the first end member 15 and second end member 16 no more channels are needed to be provided. The fluid is guided to flow from the at least one first channel 4 to the at least one second channel 5 through the shape of each of the first end member 15 and second end member 16, the shape being such as to naturally force the fluid to flow from the at least one first channel to the at least one second channel. For this it is preferable, as also elaborated above, that the at least one first channel 4 is provided in the top part of the heat exchange element 1 and the at least one second channel 5 is provided in the lower part of the heat exchange element 1. Therefore, each of the first end member 15 and second end member 16 may be a one-piece component respectively pushed on the respective end side surface of the heat exchange element 1 to thereby close the heat exchange element 1.

In embodiments of the present invention each of the first end member 15 and second end member 16 may have other shapes.

Examples in embodiments of the present invention are shown in figure 9b and figure 9c. There is shown in figure 9b an example of a first end member 15 and second end member 16 with a rectangular shape. There is shown in figure 9c an example of a first end member 15 and a second end member 16 with a cylindrical shape.

In embodiments of the present invention each of the first end member 15 and second end member 16 may comprise at least one opening 151, 161. The at least one opening 151, 161 may be used for hanging the heat exchange element 1 during coating application for adding isolation material on the outer surface of the heat exchange element 1. Figure 9d shows an example of first end member 15 and second end member 16 provided with two such openings 151, 161.

In one or more embodiments of the present invention, in the heat exchange element 1, a plurality of first channels 4 may be provided along the third direction and/or a plurality of second channels may be provided along the third direction. Preferably, the total number of first channels and/or second channels is a multiple of 2.

The cross-section of each of the plurality of first channels 4 may be the same or may be different from the cross-section of the other of the plurality of first channels 4 and/or from the cross-section of one or more or all of the plurality of second channels 5.

In embodiments of the present invention in which the number of first channels 4 is larger than the number of second channels 5, it may be preferable to provide one or more or all of the plurality of second channels 5 with larger cross-section than the cross-section of one or more or all of the plurality of first channels 4.

It is however preferable to provide the same number of first channels 4 and second channels 5 with the same cross-section to ensure for a uniform distribution of the fluid through the first channels 4 and the second channels 5.

In embodiments of the present invention in which a plurality of first channels 4 and/or a plurality of second channels 5 are provided one first opening 6 may be provided arranged to be in fluid communication with each of the plurality of first channels 4 and one second opening 7 may be provided arranged to be in fluid communication with each of the plurality of second channels 5.

In embodiments of the present invention in which a plurality of first channels 4 and/or a plurality of second channels 5 are provided, a plurality of first openings 6 may be provided on the first surface. Each of the plurality of first openings 6 may be in a fluid communication with one of the plurality of first channels 4. In addition, or alternatively, a plurality of second openings 7 may be provided on the second surface 3. Each of the plurality of second openings 7 may be in a fluid communication with one of the plurality of second channels 5.

In embodiments of the present invention, it is also possible that the number of first openings 6 is smaller or larger than the number of first channels 4 and the number of second openings 7 is smaller or larger than the number of second channels 5.

In an embodiment of the present invention, the number of first openings 6 may be smaller than the number of first channels 4. In this embodiment of the present invention, each one of the plurality of first openings 6 may be in a fluid communication with a group of the first channels 4. Additionally, or alternatively, the number of second openings 7 may be smaller than the number of second channels 5. Each one of the plurality of second openings 7 may be in a fluid communication with a group of the second channels 5.

In this embodiment of the present invention, a plurality of secondary first channels may be provided in the heat exchange element 1, each one of the plurality of secondary first channels establishing a fluid communication between one first opening 6 and the corresponding group of first channels 4. In addition or alternatively, a plurality of secondary second channels may be provided in the heat exchange element 1, each one of the plurality of secondary second channels establishing a fluid communication between one second opening 7 and the corresponding group of second channels 5.

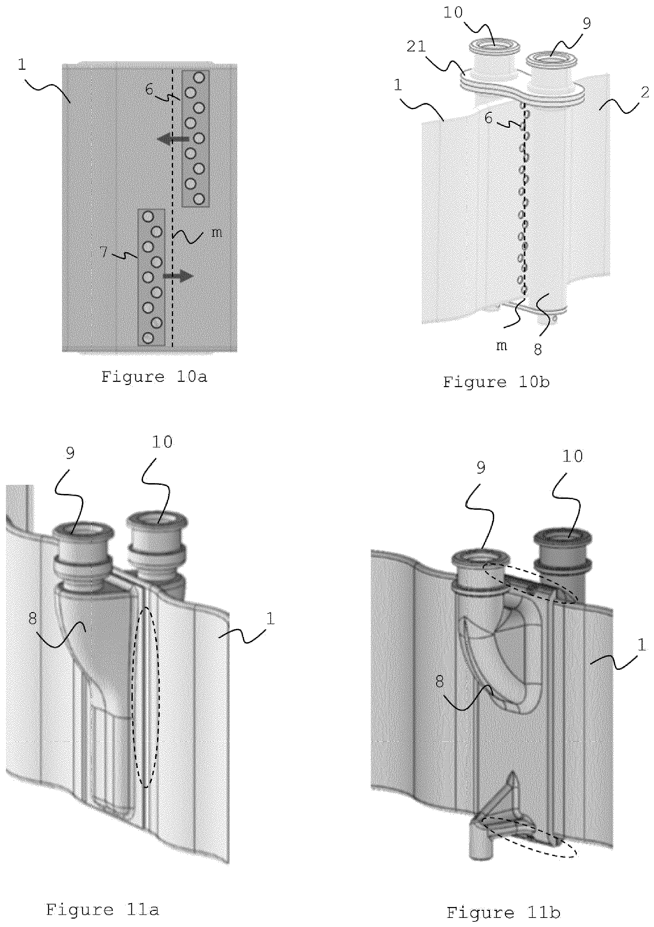

The plurality of first openings 6 and the plurality of second openings 7 may be arranged along the central line m or may be arranged on opposite sides of the central line m. In one or more embodiments of the present invention, the plurality of first openings 6 may be arranged in a zig zag pattern on one side of the central line and the plurality of second openings may be arranged in a zig zag pattern on the opposite side of the central line m. This arrangement is shown in figure 10a. In this embodiment, the plurality of first openings 6 may be provided in the top part of the first surface 2 while the plurality of second openings 7 may be provided in the bottom part of the second surface 3.

In one or more embodiments, the plurality of first openings 6 may be provided on the first surface 2 in a zig zag pattern extending from the top to the bottom of the first surface 2. Similarly, the plurality of second openings 7 may be provided on the second surface 3 in a zig zag pattern extending from the top to the bottom of the second surface 3. The arrangement for the plurality of first openings 6 is shown in figure **10b****.**

The arrangement of the first openings 6 and/or the second openings 7 in a zig zag pattern enables that the number of respective first openings 6 and second openings 7 is increased and the structural stability of the heat exchange element 1 is maintained.

There is shown in figure 11a and 11b the fluid distribution member 8 in one embodiment of the present invention. In this embodiment of the present invention the fluid distribution member 8 is comprised of two pieces and hence is a two-piece element. Each of the inlet port 9 and the outlet port 10 is mounted on a different piece of the fluid distribution member 8. In this embodiment of the present invention, the fluid distribution member 8 may not be mounted by sliding as elaborated above, but each piece may be mounted on the respective one of the first surface 2 and second surface 3. The mounted pieces may then be connected with each other and/or with the heat exchange element 1.

In the embodiment shown in figure 11a each of the first piece and second piece are fixed on the heat exchange element 1 (in the figure the dashed circle is showing the position where the one piece is fixed to the heat exchange element 1). In the embodiment shown in figure 11b each of the first piece and second piece are fixed to each other on the upper side of the heat exchange element 1 and lower side of the heat exchange element 1 (in the figure the dashed circles are showing the position where the pieces are fixed to each other).

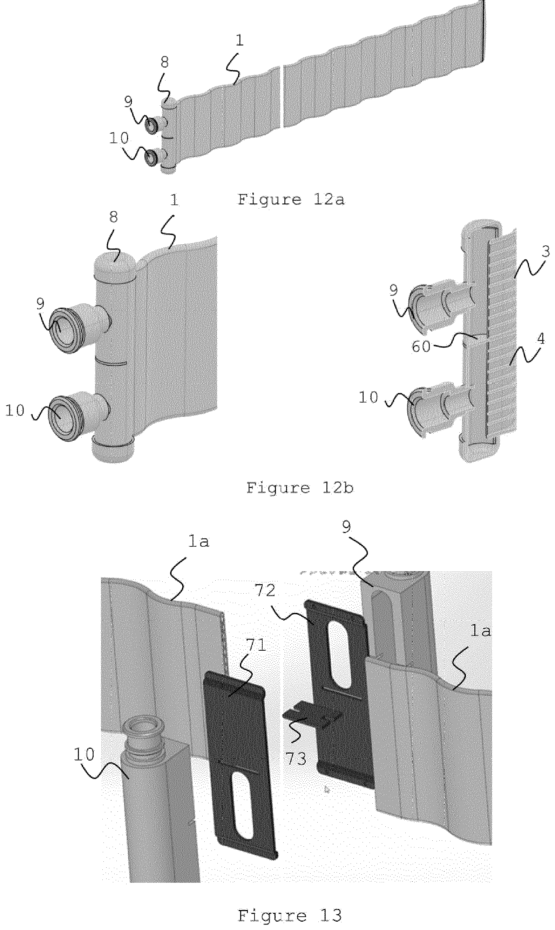

There is shown in figure 12a an embodiment not falling under the scope of the claims in which the fluid distribution member 8 is provided on one end side of the heat exchange element 1. In this embodiment, the heat exchange element 1 may be a one-piece extruded element as elaborated above. The fluid distribution member 8 may be provided on one end side of the heat exchange element 1 and one end member 15 may be provided at the opposite side of the heat exchange element 1. In this embodiment, the fluid makes a U-turn only at the end side where the end member 15 is provided.

In this embodiment, a divider 60 for dividing the at least one first channel 4 and the at least one second channel 5 may be provided in the fluid distribution member 8. There is shown in figure 12b in the left panel a part of the heat exchange assembly 100 with the fluid distribution member 8 and in the right panel a cross sectional view of the part shown in the left panel.

In a further embodiment of the present invention, the heat exchange element 1 may be a two-piece extruded element. The fluid distribution member 8 may also be a two-piece element. There is shown in figure 13 an exploded view of the heat exchange element 1, the fluid distribution member 8, and elements 71, 72, 73 for mounting the fluid distribution member 8. The mounting element 73 may also have a function of separating the fluid to flow in the at least one first channel 4 from the fluid to flow in the at least one second channel 5 to exit via the outlet port 10. Each of the elements 71 and 73 may have a corresponding opening for allowing the fluid to enter the at least one first opening 6 (not shown in the figure) and to exit via the at least one second opening 7 (not shown in the figure).

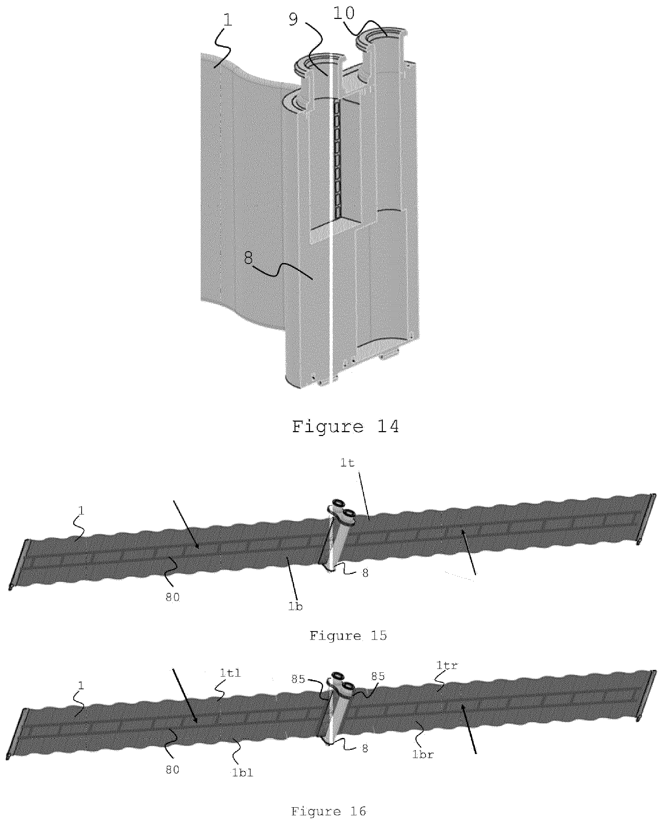

In a further embodiment of the present invention shown in figure 14 the heat exchange element 1 may be a two-piece element formed by extrusion and the fluid distribution member 8 may be a one-piece element. A cross-sectional view of the fluid distribution member 8 in this embodiment is shown in figure 14.

In one embodiment of the present invention shown in figure 15 the heat exchange element 1 may be a two-piece element formed by extrusion. In this embodiment, a separator 80 may be provided in the heat exchange element 1 that divides the heat exchange element 1 to a top half 1t and a bottom half 1b. The separator 80 separates the top half 1t and bottom half 1b such that in part of the heat exchange element (denoted with arrows in figure 15) no fluid is allowed to flow. The connection between the flow of fluid in the top half 1t and in the bottom half 1b is achieved at the end sides by way of the end elements elaborated above. In this embodiment, the fluid distribution member 8 may be the one elaborated with reference to figures 4 and 5.

In one embodiment of the present invention shown in figure 16 the heat exchange element 1 may be a four-piece component. A separator 80 is provided as in the embodiment described with reference to figure 15. The separator 80 separates the top half and bottom half such that in part of the heat exchange element (denoted with arrows in figure 16) no fluid is allowed to flow. In addition, a connection 85 in the middle portion is provided. The heat exchange element 1 is therefore divided on a top left part 1tl, top right part 1tr, bottom left part 1bl and bottom right part 1br. The four-piece construction of the heat exchange element 1 gives more flexibility in designing the fluid distribution member 8 in the middle section where the four pieces are connected to each other. The connection between the flow of fluid in the top half and in the lower half is achieved at the end sides by way of the end elements elaborated above. In this embodiment, the fluid distribution member 8 may be the one elaborated with reference to figures 4 and 5.

In embodiments of the present invention at least the following combinations are possible. The fluid distribution member 8 may be provided in the middle portion of the heat exchange element 1, or at one end side or at both end sides. It may be a one-piece preformed element or may be a two-piece element.

The heat exchange element 1 may be formed by extrusion and may be a one-piece element, or a two-piece element or a four-piece element.

The heat exchange element 1 may be provided with a separator which may be in the middle portion separating along the y direction in a left half and right half or along the x direction in top and bottom half. The first end element 15 and/or the second end element 16 may have any of the forms shown in figures 9 a), 9 b) and 9 c).

In summary, the present invention provides for a heat exchange assembly 100 that provides for a more uniform distribution of the temperature of the heat exchange fluid and therefore for better thermal performance.

Although detailed embodiments have been described, these only serve to provide a better understanding of the invention defined by the appended claims and are not to be seen as limiting.

## Claims

1. A heat exchange assembly (100) for a battery system, the battery system comprising a plurality of battery cells, the heat exchange assembly (100) comprising:
a heat exchange element (1) extending along a first direction and having:
- a first surface (2) and a second surface (3) facing the first surface along a second direction perpendicular to the first direction;
- at least one first channel (4) and at least one second channel (5) each for accommodating a fluid and provided between the first surface (2) and the second surface, each of the at least one first channel (4) and the at least one second channel (5) extending along the first direction,
and
- at least one first opening (6) provided on the first surface (2), the at least one first opening (6) being in a fluid communication with the at least one first channel (4), and at least one second opening (7) provided on the second surface (3), the at least one second opening (7) being in a fluid communication with the at least one second channel (5),
the heat exchange assembly (100) comprising further:
a fluid distribution member (8) mounted on the heat exchange element (1), the fluid distribution member (8) comprising an inlet port (9) for distributing the fluid in the at least one first channel (4) via the first opening (6) and an outlet port (10) for distributing the fluid out of the at least one second channel (5) via the second opening (7), the heat exchange assembly being **characterized in that** the fluid distribution member (8) is mounted on the heat exchange element (1) in the middle portion of the heat exchange element (1), wherein the inlet port (9) is arranged to face the first surface (2) and the outlet port (10) is arranged to face the second surface (3).

2. The heat exchange assembly (100) according to claim 1, wherein the heat exchange element (1) is a one-piece extruded element.

3. The heat exchange assembly (100) according to any one of the preceding claims, wherein the at least one first channel (4) and the at least one second channel (5) are arranged along a third direction that is perpendicular to each one of the first direction and the second direction.

4. The heat exchange assembly (100) according to any one of the preceding claims, wherein the at least one first opening (6) and the at least one second opening (7) are provided on the first surface (2) and the second surface (3) respectively in a middle portion of the heat exchange element (1).

5. The heat exchange assembly (100) according to claim 4, wherein the at least one first opening (6) and the at least one second opening (7) are arranged along a central line of the middle portion or are arranged on opposite sides of the central line, said central line extending along the third direction and dividing the middle portion into two sub-portions.

6. The heat exchange assembly (100) according to any one of the preceding claims, wherein the shape of the at least one first opening (6) is different than the shape of the at least one second opening (8) and/or the size of the at least one first opening (6) is different than the size of the at least one second opening (8).

7. The heat exchange assembly (100) according to any one of the preceding claims, wherein the fluid distribution member (8) is a pre-formed one-piece element arranged to be mounted on the heat exchange element (1) by sliding along the third direction.

8. The heat exchange assembly (100) according to any one of the preceding claims, comprising further a first support element (21) and/or a second support element (22) each mounted on the fluid distribution member (8), each of the first support element (21) and/or the second support element (22) comprising an inlet opening (211) for accommodating the inlet port (9) and an outlet opening (212) for accommodating the outlet port (10) of the fluid distribution member (8).

9. The heat exchange assembly (100) according to any one of the preceding claims, wherein the inlet port (9) comprises at least one inlet opening (91) arranged to be in fluid communication with the at least one first opening (6) and the outlet port (10) comprises at least one outlet opening (101) arranged to be in a fluid communication with the at least one second opening (7).

10. The heat exchange assembly (100) according to any one of the preceding claims, wherein in the middle portion of the heat exchange element (1) the first surface (2) has a first bulge (11) extending outwards from the heat exchange element (1) and the second surface (3) has a first bulge (12) extending outwards from the heat exchange element (1), wherein the first bulge (11) of the first surface (2) forms an inlet chamber (111) around the first opening (6) and the first bulge (12) of the second surface (3) forms an outlet chamber (121) around the second opening (7).

11. The heat exchange assembly (100) according to any one of the preceding claims, wherein in the middle portion of the heat exchange element (1) the first surface (2) has a second bulge (13) extending outwards from the heat exchange element (1) and the second surface (3) has a second bulge (14) extending outwards from the heat exchange element (1), wherein a wall of the inlet port (9) abuts against at least a part of the second bulge (13) of the first surface (2) and a wall of the outlet port (10) abuts against at least a part of the second bulge (14) of the second surface (3).

12. The heat exchange assembly (100) according to any one of the preceding claims, wherein each one of the first surface (2) and the second surface (3) has undulations, wherein preferably each undulation is arranged to accommodate at least one battery cell, wherein preferably the undulations are provided in portions of the heat exchange element (1) other than the middle portion.

13. The heat exchange assembly (100) according to any one of the preceding claims, comprising further a first end member (15) arranged on one end of the heat exchange element (1) and a second end member (16) arranged on the other end of the heat exchange element (1), each of the first end member (15) and second end member (16) establishing a fluid communication between the at least one first channel (4) and the at least one second channel (5), wherein each of the first end member (15) and the second end member (16) has a curved shape for guiding the fluid between the at least one first channel (4) and the at least one second channel (5).

14. The heat exchange assembly (100) according to any one of the preceding claims, wherein in the heat exchange element (1) a plurality of first channels (4) are provided along the third direction and/or a plurality of second channels (5) are provided along the third direction, wherein, preferably, the total number of first channels (4) and/or second channels (5) is a multiple of 2.

15. The heat exchange assembly (100) according to claim 14, wherein a plurality of first openings (6) are provided on the first surface (2), wherein each of the plurality of first openings (6) is in a fluid communication with one of the plurality of first channels (4) and/or a plurality of second openings (7) are provided on the second surface (3), wherein each of the plurality of second openings (7) is in a fluid communication with one of the plurality of second channels (5).

16. The heat exchange assembly (100) according to claim 14, wherein a plurality of first openings (6) are provided on the first surface (2), wherein each one of the plurality of first openings (6) is in a fluid communication with a group of the first channels (4), and/or a plurality of second openings (7) are provided on the second surface (3), wherein each one of the plurality of second openings (7) is in a fluid communication with a group of the second channels (5).

17. The heat exchange assembly (100) according to claim 16, wherein a plurality of secondary first channels are provided in the heat exchange element (1), each one of the plurality of secondary first channels establishing a fluid communication between one first opening (6) and the corresponding group of first channels (4), and a plurality of secondary second channels are provided in the heat exchange element (1), each one of the plurality of secondary second channels establishing a fluid communication between one second opening (7) and the corresponding group of second channels (5).

18. The heat exchange assembly (18) according to any one of claims 15 to 17, wherein the plurality of first openings (6) and the plurality of second openings (7) are arranged along the central line or are arranged on opposite sides of the central line, wherein preferably the plurality of first openings (6) are arranged in a zig zag pattern on one side of the central line and the plurality of second openings (7) are arranged in a zig zag pattern on the opposite side of the central line.

## Patentansprüche

1. Wärmetauscheranordnung (100) für ein Batteriesystem, wobei das Batteriesystem eine Vielzahl von Batteriezellen umfasst, wobei die Wärmetauscheranordnung (100) Folgendes umfasst:
ein Wärmetauschelement (1), das sich entlang einer ersten Richtung erstreckt und Folgendes aufweist:
- eine erste Oberfläche (2) und eine zweite Oberfläche (3), die der ersten Oberfläche entlang einer zweiten Richtung, die senkrecht zu der ersten Richtung ist, zugewandt ist;
- mindestens einen ersten Kanal (4) und mindestens einen zweiten Kanal (5), jeweils zur Aufnahme eines Fluids und zwischen der ersten Oberfläche (2) und der zweiten Oberfläche bereitgestellt, wobei sich jeder von dem mindestens einen ersten Kanal (4) und dem mindestens einen zweiten Kanal (5) entlang der ersten Richtung erstreckt,
und
- mindestens eine erste Öffnung (6), auf der ersten Oberfläche (2) bereitgestellt, wobei die mindestens eine erste Öffnung (6) in einer Fluidverbindung mit dem mindestens einen ersten Kanal (4) ist, und mindestens eine zweite Öffnung (7), auf der zweiten Oberfläche (3) bereitgestellt, wobei die mindestens eine zweite Öffnung (7) in einer Fluidverbindung mit dem mindestens einen zweiten Kanal (5) ist, wobei die Wärmetauscheranordnung (100) weiter Folgendes umfasst:
einen Fluidverteiler (8), der auf dem Wärmetauschelement (1) montiert ist, wobei der Fluidverteiler (8) einen Einlassstutzen (9) zum Verteilen des Fluids in dem mindestens einen ersten Kanal (4) über die erste Öffnung (6) und einen Auslassstutzen (10) zum Verteilen des Fluids aus dem mindestens einen zweiten Kanal (5) über die zweite Öffnung (7) umfasst,
wobei die Wärmetauscheranordnung **dadurch gekennzeichnet ist, dass** der Fluidverteiler (8) auf dem Wärmetauschelement (1) im mittleren Abschnitt des Wärmetauschelements (1) montiert ist, wobei der Einlassstutzen (9) dazu angeordnet ist, der ersten Oberfläche (2) zugewandt zu sein, und der Auslassstutzen (10) dazu angeordnet ist, der zweiten Oberfläche (3) zugewandt zu sein.

2. Wärmetauscheranordnung (100) nach Anspruch 1,
wobei das Wärmetauschelement (1) ein einstückig stranggepresstes Bauteil ist.

3. Wärmetauscheranordnung (100) nach einem der vorstehenden Ansprüche, wobei der mindestens eine erste Kanal (4) und der mindestens eine zweite Kanal (5) entlang einer dritten Richtung angeordnet sind, die senkrecht zu jeder der ersten Richtung und der zweiten Richtung ist.

4. Wärmetauscheranordnung (100) nach einem der vorstehenden Ansprüche, wobei die mindestens eine erste Öffnung (6) und die mindestens eine zweite Öffnung (7) jeweils auf der ersten Oberfläche (2) bzw. der zweiten Oberfläche (3) in einem mittleren Abschnitt des Wärmetauschelements (1) bereitgestellt sind.

5. Wärmetauscheranordnung (100) nach Anspruch 4, wobei die mindestens eine erste Öffnung (6) und die mindestens eine zweite Öffnung (7) entlang einer Zentrallinie des mittleren Abschnitts angeordnet sind oder auf gegenüberliegenden Seiten der Zentrallinie angeordnet sind, wobei sich die genannte Zentrallinie entlang der dritten Richtung erstreckt und den mittleren Abschnitt in zwei Unterabschnitte unterteilt.

6. Wärmetauscheranordnung (100) nach einem der vorstehenden Ansprüche, wobei die Form der mindestens einen ersten Öffnung (6) anders ist als die Form der mindestens einen zweiten Öffnung (8) und/oder die Größe der mindestens einen ersten Öffnung (6) anders ist als die Größe der mindestens einen zweiten Öffnung (8).

7. Wärmetauscheranordnung (100) nach einem der vorstehenden Ansprüche, wobei der Fluidverteiler (8) ein vorgebildetes einstückiges Element ist, das dazu angeordnet ist, auf dem Wärmetauschelement (1) montiert zu werden, indem es entlang der dritten Richtung geschoben wird.

8. Wärmetauscheranordnung (100) nach einem der vorstehenden Ansprüche, weiter umfassend ein erstes Stützelement (21) und/oder ein zweites Stützelement (22), die jeweils auf dem Fluidverteiler (8) montiert sind, wobei das erste Stützelement (21) und/oder das zweite Stützelement (22) jeweils eine Einlassöffnung (211) zur Aufnahme des Einlassstutzens (9) und eine Auslassöffnung (212) zur Aufnahme des Auslassstutzens (10) des Fluidverteilers (8) umfasst.

9. Wärmetauscheranordnung (100) nach einem der vorstehenden Ansprüche, wobei der Einlassstutzen (9) mindestens eine Einlassöffnung (91) umfasst, die dazu angeordnet ist, in einer Fluidverbindung mit der mindestens einen ersten Öffnung (6) zu sein, und der Auslassstutzen (10) mindestens eine Auslassöffnung (101) umfasst, die dazu angeordnet ist, in einer Fluidverbindung mit der mindestens einen zweiten Öffnung (7) zu sein.

10. Wärmetauscheranordnung (100) nach einem der vorstehenden Ansprüche, wobei in dem mittleren Abschnitt des Wärmetauschelements (1) die erste Oberfläche (2) eine erste Wölbung (11) aufweist, die sich von dem Wärmetauschelement (1) nach außen erstreckt, und die zweite Oberfläche (3) eine erste Wölbung (12) aufweist, die sich von dem Wärmetauschelement (1) nach außen erstreckt, wobei die erste Wölbung (11) der ersten Oberfläche (2) eine Einlasskammer (111) um die erste Öffnung (6) bildet und die erste Wölbung (12) der zweiten Oberfläche (3) eine Auslasskammer (121) um die zweite Öffnung (7) bildet.

11. Wärmetauscheranordnung (100) nach einem der vorstehenden Ansprüche, wobei in dem mittleren Abschnitt des Wärmetauschelements (1) die erste Oberfläche (2) eine zweite Wölbung (13) aufweist, die sich von dem Wärmetauschelement (1) nach außen erstreckt, und die zweite Oberfläche (3) eine zweite Wölbung (14) aufweist, die sich von dem Wärmetauschelement (1) nach außen erstreckt, wobei eine Wand des Einlassstutzens (9) an mindestens einem Teil der zweiten Wölbung (13) der ersten Oberfläche (2) anliegt und eine Wand des Auslassstutzens (10) an mindestens einem Teil der zweiten Wölbung (14) der zweiten Oberfläche (3) anliegt.

12. Wärmetauscheranordnung (100) nach einem der vorstehenden Ansprüche, wobei jede der ersten Oberfläche (2) und der zweiten Oberfläche (3) Wellungen aufweist, wobei bevorzugt jede Wellung dazu angeordnet ist, mindestens eine Batteriezelle aufzunehmen, wobei bevorzugt die Wellungen in Abschnitten des Wärmetauschelements (1) bereitgestellt sind, die andere als der mittlere Abschnitt sind.

13. Wärmetauscheranordnung (100) nach einem der vorstehenden Ansprüche, weiter umfassend ein erstes Endstück (15), das an einem Ende des Wärmetauschelements (1) angeordnet ist, und ein zweites Endstück (16), das an dem anderen Ende des Wärmetauschelements (1) angeordnet ist, wobei das erste Endstück (15) und das zweite Endstück (16) jeweils eine Fluidverbindung zwischen dem mindestens einen ersten Kanal (4) und dem mindestens einen zweiten Kanal (5) herstellen, wobei das erste Endstück (15) und das zweite Endstück (16) jeweils eine gekrümmte Form zum Führen des Fluids zwischen dem mindestens einen ersten Kanal (4) und dem mindestens einen zweiten Kanal (5) aufweisen.

14. Wärmetauscheranordnung (100) nach einem der vorstehenden Ansprüche, wobei in dem Wärmetauschelement (1) eine Vielzahl von ersten Kanälen (4) entlang der dritten Richtung bereitgestellt sind und/oder eine Vielzahl von zweiten Kanälen (5) entlang der dritten Richtung bereitgestellt sind, wobei bevorzugt die Gesamtzahl der ersten Kanäle (4) und/oder zweiten Kanäle (5) ein Vielfaches von 2 ist.

15. Wärmetauscheranordnung (100) nach Anspruch 14, wobei eine Vielzahl von ersten Öffnungen (6) auf der ersten Oberfläche (2) bereitgestellt sind, wobei jede der Vielzahl von ersten Öffnungen (6) in einer Fluidverbindung mit einem der Vielzahl von ersten Kanälen (4) ist, und/oder eine Vielzahl von zweiten Öffnungen (7) auf der zweiten Oberfläche (3) bereitgestellt sind, wobei jede der Vielzahl von zweiten Öffnungen (7) in einer Fluidverbindung mit einem der Vielzahl von zweiten Kanälen (5) ist.

16. Wärmetauscheranordnung (100) nach Anspruch 14, wobei eine Vielzahl von ersten Öffnungen (6) auf der ersten Oberfläche (2) bereitgestellt sind, wobei jede einzelne der Vielzahl von ersten Öffnungen (6) in einer Fluidverbindung mit einer Gruppe der ersten Kanäle (4) ist, und/oder eine Vielzahl von zweiten Öffnungen (7) auf der zweiten Oberfläche (3) bereitgestellt sind, wobei jede einzelne der Vielzahl von zweiten Öffnungen (7) in einer Fluidverbindung mit einer Gruppe der zweiten Kanäle (5) ist.

17. Wärmetauscheranordnung (100) nach Anspruch 16, wobei in dem Wärmetauschelement (1) eine Vielzahl von sekundären ersten Kanälen bereitgestellt sind, wobei jeder einzelne der Vielzahl von sekundären ersten Kanälen eine Fluidverbindung zwischen einer ersten Öffnung (6) und der entsprechenden Gruppe von ersten Kanälen (4) herstellt, und in dem Wärmetauschelement (1) eine Vielzahl von sekundären zweiten Kanälen bereitgestellt sind, wobei jeder einzelne der Vielzahl von sekundären zweiten Kanälen eine Fluidverbindung zwischen einer zweiten Öffnung (7) und der entsprechenden Gruppe von zweiten Kanälen (5) herstellt.

18. Wärmetauscheranordnung (18) nach einem der Ansprüche 15 bis 17, wobei die Vielzahl von ersten Öffnungen (6) und die Vielzahl von zweiten Öffnungen (7) entlang der Zentrallinie angeordnet sind oder auf gegenüberliegenden Seiten der Zentrallinie angeordnet sind, wobei bevorzugt die Vielzahl von ersten Öffnungen (6) in einem Zickzackmuster auf einer Seite der Zentrallinie angeordnet sind und die Vielzahl von zweiten Öffnungen (7) in einem Zickzackmuster auf der gegenüberliegenden Seite der Zentrallinie angeordnet sind.

## Revendications

1. Ensemble (100) d'échange de chaleur pour un système de batterie, le système de batterie comprenant une pluralité de cellules de batterie, l'ensemble (100) d'échange de chaleur comprenant :
un élément (1) d'échange de chaleur s'étendant le long d'une première direction et présentant :
- une première surface (2) et une deuxième surface (3) faisant face à la première surface le long d'une deuxième direction perpendiculaire à la première direction ;
- au moins un premier canal (4) et au moins un deuxième canal (5) chacun destiné à recevoir un fluide et fourni entre la première surface (2) et la deuxième surface, chacun du au moins un premier canal (4) et du au moins un deuxième canal (5) s'étendant le long de la première direction,
et
- au moins une première ouverture (6) fournie sur la première surface (2), la au moins une première ouverture (6) étant en communication fluidique avec le au moins un premier canal (4), et au moins une deuxième ouverture (7) fournie sur la deuxième surface (3), la au moins une deuxième ouverture (7) étant en communication fluidique avec le au moins un deuxième canal (5),
l'ensemble (100) d'échange de chaleur comprenant en outre :
un élément (8) de distribution de fluide monté sur l'élément (1) d'échange de chaleur, l'élément (8) de distribution de fluide comprenant un orifice d'entrée (9) destiné à distribuer le fluide dans le au moins un premier canal (4) par l'intermédiaire de la première ouverture (6) et un orifice de sortie (10) destiné à distribuer le fluide hors du au moins un deuxième canal (5) par l'intermédiaire de la deuxième ouverture (7),
l'ensemble d'échange de chaleur étant **caractérisé en ce que** l'élément (8) de distribution de fluide est monté sur l'élément (1) d'échange de chaleur dans la partie médiane de l'élément (1) d'échange de chaleur, dans lequel l'orifice d'entrée (9) est agencé pour faire face à la première surface (2) et l'orifice de sortie (10) est agencé pour faire face à la deuxième surface (3).

2. Ensemble (100) d'échange de chaleur selon la revendication 1, dans lequel l'élément (1) d'échange de chaleur est un élément extrudé monopièce.

3. Ensemble (100) d'échange de chaleur selon l'une quelconque des revendications précédentes, dans lequel le au moins un premier canal (4) et le au moins un deuxième canal (5) sont agencés le long d'une troisième direction qui est perpendiculaire à chacune de la première direction et de la deuxième direction.

4. Ensemble (100) d'échange de chaleur selon l'une quelconque des revendications précédentes, dans lequel la au moins une première ouverture (6) et la au moins une deuxième ouverture (7) sont fournies sur la première surface (2) et la deuxième surface (3) respectivement dans une partie médiane de l'élément (1) d'échange de chaleur.

5. Ensemble (100) d'échange de chaleur selon la revendication 4, dans lequel la au moins une première ouverture (6) et la au moins une deuxième ouverture (7) sont agencées le long d'une ligne centrale de la partie médiane ou sont agencées sur des côtés opposés de la ligne centrale, ladite ligne centrale s'étendant le long de la troisième direction et divisant la partie médiane en deux sous-parties.

6. Ensemble (100) d'échange de chaleur selon l'une quelconque des revendications précédentes, dans lequel la forme de la au moins une première ouverture (6) est différente de la forme de la au moins une deuxième ouverture (8) et/ou la taille de la au moins une première ouverture (6) est différente de la taille de la au moins une deuxième ouverture (8).

7. Ensemble (100) d'échange de chaleur selon l'une quelconque des revendications précédentes, dans lequel l'élément (8) de distribution de fluide est un élément monopièce préformé agencé pour être monté sur l'élément (1) d'échange de chaleur par glissement le long de la troisième direction.

8. Ensemble (100) d'échange de chaleur selon l'une quelconque des revendications précédentes, comprenant en outre un premier élément de support (21) et/ou un deuxième élément de support (22) chacun monté sur l'élément (8) de distribution de fluide, chacun du premier élément de support (21) et/ou du deuxième élément de support (22) comprenant une ouverture d'entrée (211) destinée à recevoir l'orifice d'entrée (9) et une ouverture de sortie (212) destinée à recevoir l'orifice de sortie (10) de l'élément (8) de distribution de fluide.

9. Ensemble (100) d'échange de chaleur selon l'une quelconque des revendications précédentes, dans lequel l'orifice d'entrée (9) comprend au moins une ouverture d'entrée (91) agencée pour être en communication fluidique avec la au moins une première ouverture (6) et l'orifice de sortie (10) comprend au moins une ouverture de sortie (101) agencée pour être en communication fluidique avec la au moins une deuxième ouverture (7).

10. Ensemble (100) d'échange de chaleur selon l'une quelconque des revendications précédentes, dans lequel, dans la partie médiane de l'élément (1) d'échange de chaleur, la première surface (2) présente un premier renflement (11) s'étendant vers l'extérieur depuis l'élément (1) d'échange de chaleur et la deuxième surface (3) présente un premier renflement (12) s'étendant vers l'extérieur depuis l'élément (1) d'échange de chaleur, dans lequel le premier renflement (11) de la première surface (2) forme une chambre d'entrée (111) autour de la première ouverture (6) et le premier renflement (12) de la deuxième surface (3) forme une chambre de sortie (121) autour de la deuxième ouverture (7).

11. Ensemble (100) d'échange de chaleur selon l'une quelconque des revendications précédentes, dans lequel, dans la partie médiane de l'élément (1) d'échange de chaleur, la première surface (2) présente un deuxième renflement (13) s'étendant vers l'extérieur depuis l'élément (1) d'échange de chaleur et la deuxième surface (3) présente un deuxième renflement (14) s'étendant vers l'extérieur depuis l'élément (1) d'échange de chaleur, dans lequel une paroi de l'orifice d'entrée (9) vient en butée contre au moins une partie du deuxième renflement (13) de la première surface (2) et une paroi de l'orifice de sortie (10) vient en butée contre au moins une partie du deuxième renflement (14) de la deuxième surface (3).

12. Ensemble (100) d'échange de chaleur selon l'une quelconque des revendications précédentes, dans lequel chacune de la première surface (2) et de la deuxième surface (3) présente des ondulations, dans lequel, de préférence, chaque ondulation est agencée pour recevoir au moins une cellule de batterie, dans lequel, de préférence, les ondulations sont fournies dans des parties de l'élément (1) d'échange de chaleur autres que la partie médiane.

13. Ensemble (100) d'échange de chaleur selon l'une quelconque des revendications précédentes, comprenant en outre un premier élément d'extrémité (15) agencé sur une extrémité de l'élément (1) d'échange de chaleur et un deuxième élément d'extrémité (16) agencé sur l'autre extrémité de l'élément (1) d'échange de chaleur, chacun du premier élément d'extrémité (15) et du deuxième élément d'extrémité (16) établissant une communication fluidique entre le au moins un premier canal (4) et le au moins un deuxième canal (5), dans lequel chacun du premier élément d'extrémité (15) et du deuxième élément d'extrémité (16) présente une forme incurvée destinée à guider le fluide entre le au moins un premier canal (4) et le au moins un deuxième canal (5).

14. Ensemble (100) d'échange de chaleur selon l'une quelconque des revendications précédentes, dans lequel, dans l'élément (1) d'échange de chaleur, une pluralité de premiers canaux (4) sont fournis le long de la troisième direction et/ou une pluralité de deuxièmes canaux (5) sont fournis le long de la troisième direction, dans lequel, de préférence, le nombre total de premiers canaux (4) et/ou de deuxièmes canaux (5) est un multiple de 2.

15. Ensemble (100) d'échange de chaleur selon la revendication 14, dans lequel une pluralité de premières ouvertures (6) sont fournies sur la première surface (2), dans lequel chacune de la pluralité de premières ouvertures (6) est en communication fluidique avec l'un de la pluralité de premiers canaux (4) et/ou une pluralité de deuxièmes ouvertures (7) sont fournies sur la deuxième surface (3), dans lequel chacune de la pluralité de deuxièmes ouvertures (7) est en communication fluidique avec l'un de la pluralité de deuxièmes canaux (5).

16. Ensemble (100) d'échange de chaleur selon la revendication 14, dans lequel une pluralité de premières ouvertures (6) sont fournies sur la première surface (2), dans lequel chacune de la pluralité de premières ouvertures (6) est en communication fluidique avec un groupe des premiers canaux (4), et/ou une pluralité de deuxièmes ouvertures (7) sont fournies sur la deuxième surface (3), dans lequel chacune de la pluralité de deuxièmes ouvertures (7) est en communication fluidique avec un groupe des deuxièmes canaux (5).

17. Ensemble (100) d'échange de chaleur selon la revendication 16, dans lequel une pluralité de premiers canaux secondaires sont fournis dans l'élément (1) d'échange de chaleur, chacun de la pluralité de premiers canaux secondaires établissant une communication fluidique entre une première ouverture (6) et le groupe correspondant de premiers canaux (4), et une pluralité de deuxièmes canaux secondaires sont fournis dans l'élément (1) d'échange de chaleur, chacun de la pluralité de deuxièmes canaux secondaires établissant une communication fluidique entre une deuxième ouverture (7) et le groupe correspondant de deuxièmes canaux (5).

18. Ensemble (18) d'échange de chaleur selon l'une quelconque des revendications 15 à 17, dans lequel la pluralité de premières ouvertures (6) et la pluralité de deuxièmes ouvertures (7) sont agencées le long de la ligne centrale ou sont agencées sur des côtés opposés de la ligne centrale, dans lequel, de préférence, la pluralité de premières ouvertures (6) sont agencées dans un motif en zigzag sur un côté de la ligne centrale et la pluralité de deuxièmes ouvertures (7) sont agencées dans un motif en zigzag sur le côté opposé de la ligne centrale.
